# EUROPEAN PATENT APPLICATION

(11) **EP 3 282 414 A1**
(43) Date of publication of application: **14.02.2018**
(21) Application number: 16183885.9
(22) Date of filing: 11.08.2016
(51) Int. Cl.: G06Q 20/32, G06Q 20/36

(54) **FASTER DIGITAL WALLET PROCESSING**

(71) Applicant: Mastercard International Incorporated, New York, NY 10577 (US)
(72) Inventor: Saby, Bertrand, 28012 Madrid (ES); Freire, Ramon, 28109 Alcobendas (ES)
(74) Representative: Gill Jennings & Every LLP

(57) **Abstract**

The present disclosure relates to increasing the speed of usage of digital wallets. A method of processing a digital wallet transaction comprises: receiving a transaction authorisation request message comprising a transaction value and payment credentials for a holding credit line; and responsive thereto, comparing the transaction value to the holding credit line's current balance. A method of conducting a digital wallet transaction comprises: in response to receiving a push notification of a transaction approval indicating that a holding credit line balance is determined to be equal to or to exceed a transaction value, presenting a digital wallet holder with a plurality of funding options for the transaction. The holding credit line balance is the sum of a plurality of account balances for a plurality of accounts associated with the digital wallet. The funding options comprise funding the transaction from one or more of those accounts.

## Description

The present disclosure relates to increasing the speed of usage of digital wallets. In particular, the disclosure relates to expediting the way consumers can pay through multiple accounts (up to their full banking position) using a single payment tool in a digital wallet.

More specifically, aspects relate to methods of processing/conducting a digital wallet transaction, a computer-readable medium comprising computer-executable instructions which, when executed by a processor, effect those methods, and a computer device comprising a processor operably coupled to a memory, the memory storing computer-executable instructions which, when executed by the processor, effect those methods.

As a greater number of goods and services become available online, and online banking becomes more prevalent, the number of online transactions is rising. In addition, with the widespread and increasing usage of smartphones and other mobile user devices such as tablets and smartwatches for a variety of functions, mobile payment using such devices is becoming more common. Mobile payments can take two forms. They can be made at a physical point of sale (POS), directly replacing traditional face to face payment methods such as cash, card present and cheque transactions. These physical POS transactions often use contactless technology such as near field communication (NFC). Mobile payments can also be made online through the mobile device's internet connection, e.g. via the user interface of an internet browser or app, allowing card not present transactions to be made on the move, away from a personal computer (PC).

The advent of mobile and online payments has led to the introduction of digital wallets which securely store payment credentials associated with multiple accounts. Each set of payment credentials typically corresponds to the credentials on a physical card such as a debit card, credit card or loyalty card. The account holder can access and/or use those credentials to make payments online or via their mobile device by proving their identity e.g. by logging into their digital wallet via the user interface of an app. This means they do not need to carry their physical cards with them.

However, currently digital wallets are effectively straight replacements for physical wallets. Since the digital wallet holder has to prove their identity e.g. through a login process, and select which account to use before making a payment, using a digital wallet is often no quicker than using a physical wallet.

What is needed is a faster digital wallet transaction process.

According to a first aspect, there is provided a method of processing a digital wallet transaction, comprising: receiving a transaction authorisation request message comprising a transaction value and payment credentials for a holding credit line; responsive thereto, comparing the transaction value to the holding credit line's current balance; and, responsive thereto, if the transaction value exceeds the holding credit line balance, issuing a transaction rejection message, or if the holding credit line balance is equal to or exceeds the transaction value, issuing a transaction approval message; wherein the holding credit line balance is the sum of a plurality of account balances for a plurality of accounts associated with a digital wallet.

When the holding credit line balance is equal to or exceeds the transaction value, the method could further comprise, at a later time than the issuing of the transaction approval message, receiving a message indicating a user selection of one or more accounts to fund the transaction from the plurality of accounts associated with the digital wallet.

The method could further comprise, responsive to receiving the transaction authorisation request message, determining the holding credit line's current balance by summing the plurality of account balances.

According to a second aspect, there is provided a method of conducting a digital wallet transaction, comprising: in response to receiving a push notification of a transaction approval indicating that a holding credit line balance is determined to be equal to or to exceed a transaction value, presenting a digital wallet holder with a plurality of funding options for the transaction; wherein the holding credit line balance is the sum of a plurality of account balances for a plurality of accounts associated with the digital wallet and the funding options comprise funding the transaction from one or more of those accounts.

The method could further comprise, at the same time as presenting the digital wallet holder with the plurality of funding options, presenting them with an option to defer selection of one of the funding options.

The method could further comprise, following expiry of a predetermined period after receipt of the push notification, or after receiving a predetermined number of selections of the deferment option, initiating funding of the transaction from a predetermined default account of the plurality of accounts.

The plurality of funding options could comprise funding from a credit account, the method further comprising presenting the digital wallet holder with a plurality of payment schedule options for payment through the credit account.

The method could further comprising receiving a selection of one of the payment schedule options and, in response thereto, presenting the digital wallet holder with terms and conditions associated with the selected payment schedule option and requesting confirmation of the selection.

The method could further comprise, prior to receiving the push notification, transmitting a transaction authorisation request message comprising the transaction value and payment credentials for the holding credit line.

The sum of the plurality of account balances could be an algebraic sum of the balances of every account associated with the digital wallet. The sum of the plurality of account balances could be an algebraic sum of the balances of only those accounts associated with the digital wallet having positive balances.

The plurality of accounts associated with the digital wallet could comprise a credit account, debit account, checking account, current account, savings account and/or loyalty point account.

The transaction could be one of an online transaction and a mobile wallet transaction.

According to a third aspect, there is provided a computer-readable medium comprising computer-executable instructions which, when executed by a processor, effect the method of either of the first or second aspects.

According to a fourth aspect, there is provided a computer device comprising a processor operably coupled to a memory, the memory storing computer-executable instructions which, when executed by the processor, effect the method of either of the first or second aspects.

According to a fifth aspect, there is provided a system comprising a user device and a payment network, configured to perform the method of either of the first or second aspects.

Aspects of the present invention will now be described by way of example with reference to the accompanying figures. In the figures:
Figure 1 is a flowchart of an example method performed in a payment network;
Figure 2 is a flowchart of an example method performed at a digital wallet holder's user device; and
Figure 3 illustrates an example message flow for a shopping event where payment is made using a digital wallet.

The following description is presented to enable any person skilled in the art to make and use the system, and is provided in the context of a particular application. Various modifications to the disclosed embodiments will be readily apparent to those skilled in the art.

The present inventors have realised that improvements to digital wallets can be made by abandoning the existing one to one correspondence with traditional card transactions. Although digital wallet holders can find the existing similarities comforting, the overall user experience can be improved as a result of increased transaction speed if transaction authorisations are made based on the total balance available from all accounts the digital wallet is linked to, or otherwise associated with. This is achieved, without affecting the merchant's experience, through the use of a holding credit line which incorporates the available balances of all those accounts. For example, the holding credit line balance could be an algebraic sum of the balances of all the accounts associated with the digital wallet, or an algebraic sum of all of those accounts which have positive balances.

Specifically, the proposed method involves a transaction authorisation request message being transmitted over a payment network, but comprising a transaction value and payment credentials for a holding credit line as opposed to a particular debit, credit or loyalty card account. The holding credit line credentials could appear to the merchant system to be the credentials of a debit account. The holding credit line could be administrated by any suitable credit institution e.g. the issuer of the accounts making up the holding credit line, or any other institution with access rights to the holding credit line. The holding credit line administrator compares the transaction value extracted from the transaction authorisation request message to the holding credit line's current balance. If the transaction value exceeds the holding credit line balance, a transaction rejection message is issued. On the other hand, if the holding credit line balance is equal to or exceeds the transaction value, a transaction approval message is issued.

In this manner, the wallet holder does not have to select which account to fund the transaction from before authorisation can be requested. This allows the transaction to proceed quicker than existing digital wallet transactions. It also becomes possible to fund a single transaction from multiple accounts in, or otherwise associated with, the digital wallet if there are not sufficient funds in any one account, or if the wallet holder wishes to spread out their spending for any reason, improving approval and conversion rates. Further, the digital wallet holder need not keep track of the balances of individual accounts to avoid time being wasted (and embarrassment being caused) by having an attempted payment declined just because the balance of a particular account is too low to fund the transaction, even though another account in, or otherwise associated with, the digital wallet (or a combination of accounts) may hold sufficient funds.

The plurality of accounts associated with the digital wallet could for example comprise all accounts of the digital wallet holder with a particular issuer, or all accounts registered with whatever entity administers the digital wallet (which may be an issuer). Alternatively, the digital wallet holder could select specific accounts they wish to be associated with the digital wallet. The accounts associated with the digital wallet could include payment accounts with associated cards the digital wallet holder might carry in a physical wallet, as well as other types of accounts not traditionally used directly for purchases, such as savings accounts. The types of account associated with the digital wallet can include, for example, credit accounts, debit accounts, checking accounts, current accounts, savings accounts and loyalty point accounts.

The digital wallet holder may be provided with a push notification message to their user device to confirm transaction authorisation.

The digital wallet holder may set up a default funding option, and alternatively or additionally may be prompted to confirm the funding option to use following authorisation of each transaction. For example, this prompt may be incorporated into or triggered by the aforementioned push notification message. The prompt could provide the digital wallet holder with an option to defer selection of one of the funding options. In this case, funding from a default funding option may automatically occur in certain circumstances, e.g. following a predetermined period after receipt of the push notification, or after a predetermined number of selections of the deferment option.

The funding options could comprise funding from a credit account. In that case, the digital wallet holder could be presented with a plurality of payment schedule options for payment through the credit account. For example, they could choose to pay off the credit transaction at the end of the current month, on a specific date, or in instalments at periodic intervals, e.g. weekly or monthly.

Following selection of one of the payment schedule options, the digital wallet holder could be presented with terms and conditions associated with the selected payment schedule option and asked to confirm their selection.

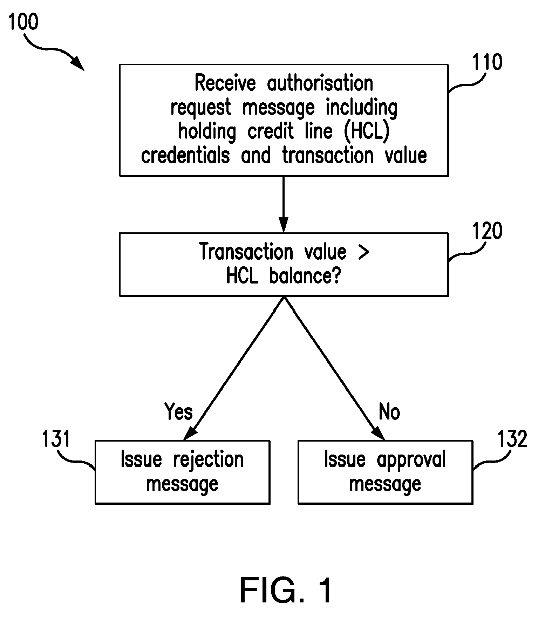

Figure 1 is a flowchart of an example method 100 performed in a payment network, for example by a holding credit line administrator (although tasks could be distributed between different entities within the network e.g. one or more card associations or issuers). At 110, a transaction authorisation request message comprising a transaction value and payment credentials for a holding credit line is received. In response to this, at 120 the transaction value is compared to the holding credit line's current balance. If the transaction value exceeds the holding credit line balance, then the flow moves to 131 where a transaction rejection message is issued. Alternatively, if the holding credit line balance is equal to or exceeds the transaction value, the flow moves to 132 where a transaction approval message is issued.

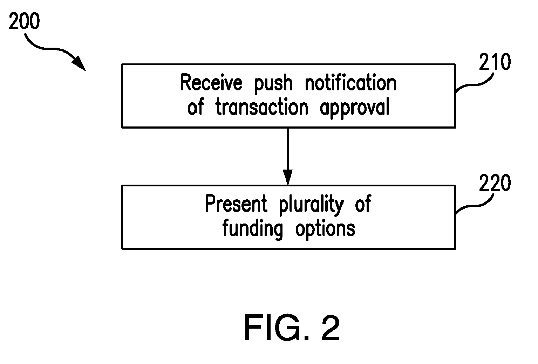

Figure 2 is a flowchart of an example method 200 performed at a digital wallet holder's user device. At 210 a push notification of a transaction approval indicating that a holding credit line balance is determined to be equal to or to exceed a transaction value is received. In response to this, at 220 the digital wallet holder is presented with a plurality of funding options for the transaction.

When a digital wallet holder wishes to register for the holding credit line service, they may be presented with several options for the default settings. For example, they could be prompted to select one of the following for the default funding method.
- Instant debit
   ∘ Debit card account
   ∘ Checking account
   ∘ Savings account
- Credit
   ∘ End of month
   ∘ Specific date*
   ∘ Instalments*
- Delay decision
   ∘ By fixed period*
   ∘ At fixed time*
Selecting any of the options marked with asterisks could result in a prompt to select further details, e.g. respectively the specific date itself, the instalment period (e.g. weekly, monthly), the fixed period (e.g. in hours) and the fixed time (e.g. of day). Selecting any of the funding options could result in terms and conditions associated with that funding option being presented until the user confirms acceptance of the terms and conditions or cancels the selection.

The registration process could comprise selecting further settings (and/or accepting certain default settings). For example, the digital wallet holder might only be asked for funding option selection for transactions above a certain value, or where the aggregate transaction value from the digital wallet in a predetermined period (e.g. a day or a week) has exceeded a pre-set value. Certain merchants could also be placed on a white list or a black list. For example, a local public transport provider might be on a white list such that the digital wallet holder is not asked to confirm the funding option for payments to them every time they travel; the default funding option is just used instead. Similarly, the digital wallet holder might wish to place a travel agent on a blacklist, to ensure they are prompted to consider which funding option to use when booking a holiday.

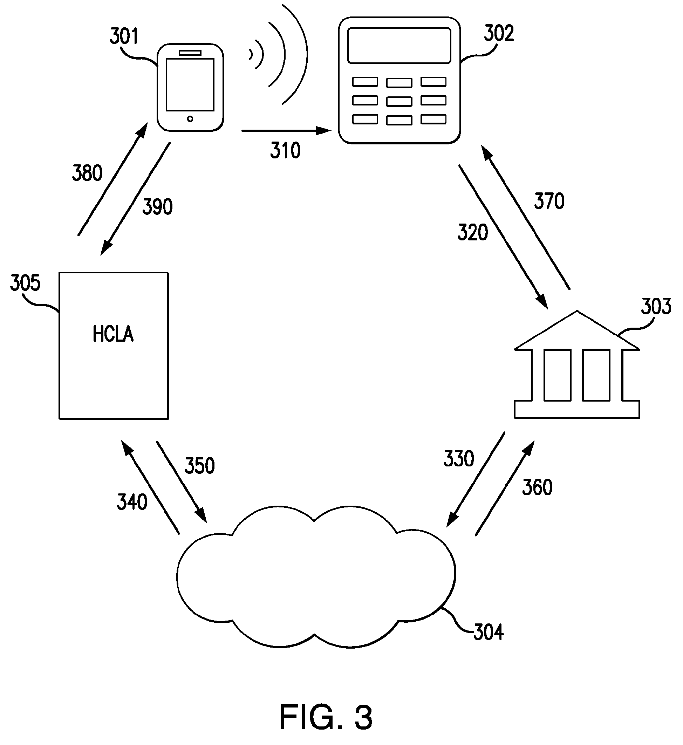

Figure 3 illustrates an example message flow for a shopping event where payment is made using a digital wallet having the holding credit line functionality described herein.

At 310 an authorisation request message is transmitted from the user device 301 (e.g. smartphone) of a digital wallet holder to the user device 302 (e.g. POS) of a merchant, e.g. via NFC. At 310 the authorisation request message is transmitted from the merchant device to the acquirer 303 (i.e. the merchant's bank). At 330 the request is passed on to a payment network 304, through which it is routed to the holding credit line administrator (HCLA) 305 at 340. Although the authorisation request message may be modified during this routing, at every stage it contains the information necessary for the HCLA to identify the holding credit line and transaction value, but appears to the merchant, acquirer and payment network to be a standard debit card authorisation request.

The HCLA then determines the current holding credit line balance and compares this to the transaction value. If the holding credit line balance is high enough to cover the transaction value, the HCLA subtracts the transaction value form the holding credit line balance and issues an approval message at 350. The payment network passes this on to the acquirer at 360, which informs the merchant at 370. The merchant then relies on this debit authorisation payment guarantee to provide the digital wallet holder with the desired goods or services.

Subsequent to the HCLA determining that the holding credit line balance is high enough to cover the transaction value, at 380 the HCLA pushes a request for funding type selection to the digital wallet holder's user device 301. This may for example be done immediately, after a predetermined period or at a predetermined time of day, depending on the settings in place e.g. as selected by the digital wallet holder on registration. The digital wallet holder might make a selection immediately, or might choose to defer selecting a funding option.

The digital wallet holder might only be presented with funding options which allow the entire transaction to be funded from a single source. Alternatively, they might be presented with all possible funding options, but prompted to select a subsequent funding option to make up the balance of the transaction if the initial funding option selected cannot cover the entire transaction value.

On a selection being made, or after all permitted deferments have expired, a funding option selection message is transmitted to the HCLA at 390, allowing the HCLA to settle the transaction. (Alternatively, if the digital wallet holder does not make any selection, or selects a deferment option, the HCLA could settle the transaction using a default funding option on expiry of a timer, without ever receiving message 390.)

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A method of processing a digital wallet transaction, comprising:
receiving a transaction authorisation request message comprising a transaction value and payment credentials for a holding credit line;
responsive thereto, comparing the transaction value to the holding credit line's current balance; and, responsive thereto,
if the transaction value exceeds the holding credit line balance, issuing a transaction rejection message, or
if the holding credit line balance is equal to or exceeds the transaction value, issuing a transaction approval message;
wherein the holding credit line balance is the sum of a plurality of account balances for a plurality of accounts associated with a digital wallet.

2. The method of claim 1, wherein when the holding credit line balance is equal to or exceeds the transaction value, the method further comprises, at a later time than the issuing of the transaction approval message, receiving a message indicating a user selection of one or more accounts to fund the transaction from the plurality of accounts associated with the digital wallet.

3. The method of either of claims 1 or 2, further comprising, responsive to receiving the transaction authorisation request message, determining the holding credit line's current balance by summing the plurality of account balances.

4. A method of conducting a digital wallet transaction, comprising:
in response to receiving a push notification of a transaction approval indicating that a holding credit line balance is determined to be equal to or to exceed a transaction value, presenting a digital wallet holder with a plurality of funding options for the transaction;
wherein the holding credit line balance is the sum of a plurality of account balances for a plurality of accounts associated with the digital wallet and the funding options comprise funding the transaction from one or more of those accounts.

5. The method of claim 4, further comprising, at the same time as presenting the digital wallet holder with the plurality of funding options, presenting them with an option to defer selection of one of the funding options.

6. The method of either of claims 4 or 5, further comprising, following expiry of a predetermined period after receipt of the push notification, or after receiving a predetermined number of selections of the deferment option, initiating funding of the transaction from a predetermined default account of the plurality of accounts.

7. The method of any of claims 4 to 6, wherein the plurality of funding options comprise funding from a credit account, the method further comprising presenting the digital wallet holder with a plurality of payment schedule options for payment through the credit account.

8. The method of claim 7, further comprising receiving a selection of one of the payment schedule options and, in response thereto, presenting the digital wallet holder with terms and conditions associated with the selected payment schedule option and requesting confirmation of the selection.

9. The method of any of claims 4 to 8, further comprising, prior to receiving the push notification, transmitting a transaction authorisation request message comprising the transaction value and payment credentials for the holding credit line.

10. The method of any preceding claim, wherein the sum of the plurality of account balances is either:
an algebraic sum of the balances of every account associated with the digital wallet; or
an algebraic sum of the balances of only those accounts associated with the digital wallet having positive balances.

11. The method of any preceding claim, wherein the plurality of accounts associated with the digital wallet comprise a credit account, debit account, checking account, current account, savings account and/or loyalty point account.

12. The method of any preceding claim, wherein the transaction is one of an online transaction and a mobile wallet transaction.

13. A computer-readable medium comprising computer-executable instructions which, when executed by a processor, effect the method of any preceding claim.

14. A computer device comprising a processor operably coupled to a memory, the memory storing computer-executable instructions which, when executed by the processor, effect the method of any of claims 1 to 12.

15. A system comprising a user device and a payment network, configured to perform the method of any of claims 1 to 12.
